# EUROPÄISCHE PATENTANMELDUNG

(11) **EP 1 210 854 A1**
(43) Veröffentlichungstag der Anmeldung: **05.06.2002**
(21) Anmeldenummer: 01127679.7
(22) Anmeldetag: 21.11.2001
(51) Int. Cl.: A01B 63/00

(54) **Landwirtschaftliche Maschine oder Gerät mit Positionierungszylinder**

(30) Priorität: 30.11.2000 DE 10059542
(71) Anmelder: DEERE & COMPANY, Moline, Illinois 61265-8098 (US)
(72) Erfinder: Dannigkeit, Helmut, 66484 Battweiler (DE); Beeren, Joseph Marie Henrie, 5961 SB Horst (NL); Viaud, Jean, 70100 Gray (FR)
(74) Vertreter: Holst, Sönke, Dr.

(57) **Zusammenfassung**

Die Erfindung bezieht sich auf eine Erntemaschine oder eine Mähmaschine oder ein Gerät zur Aufnahme und Bewegung von Lasten oder eine Sämaschine oder eine Spritzmaschine, mit einem Element, das durch einen in einem Gehäuse angeordneten Hydraulikzylinder bewegbar ist, und einer mit einem Sensor zur Erfassung der Position des Elements und/oder des Kolbens des Hydraulikzylinders verbundenen Steuerung zur Regelung der Beaufschlagung des Hydraulikzylinders mit Hydraulikflüssigkeit. Um die Betriebssicherheit des Sensors zu verbessern, wird vorgeschlagen, dass der Sensor innerhalb des Gehäuses des Hydraulikzylinders angeordnet ist.

## Beschreibung

Die Erfindung betrifft eine Erntemaschine oder eine Mähmaschine oder ein Gerät zur Aufnahme und Bewegung von Lasten oder eine Sämaschine, mit einem Element, das durch einen in einem Gehäuse angeordneten Hydraulikzylinder bewegbar ist, wobei die Position des Elements durch einen Sensor erfassbar ist.

In der DE 197 47 949 A ist eine Vorrichtung zur Längeneinstellung eines Oberlenkers einer Anbauvorrichtung eines Traktors beschrieben, bei der ein so genannter Positionierungszylinder Verwendung findet. Der Positionierungszylinder umfasst ein Gehäuse, in dem ein doppelt wirkender Hydraulikzylinder und ein Sensor angeordnet ist. Der Sensor erfasst die Position des Kolbens und dient zur Regelung der Beaufschlagung des Hydraulikzylinders mit unter Druck stehender Hydraulikflüssigkeit. Der Positionierungszylinder wird durch eine geeignete, mit dem Sensor verbundene Steuerung in eine gewünschte Position verbracht.

An landwirtschaftlichen Maschinen, wie Bodenbearbeitungsgeräten, Ladegeräten und Erntemaschinen sind häufig verstellbare Elemente angebracht, beispielsweise Ernteguttransportelemente oder Erntegutbearbeitungselemente, die durch mechanische Antriebe gegenüber dem übrigen Gerät linear bewegbar oder verschwenkbar sind. Im Stand der Technik dient ein außerhalb des Gehäuses eines Hydraulikzylinders angeordneter Sensor zur Erfassung der tatsächlichen Position des verstellbaren Elements und zur Regelung der Druckbeaufschlagung des Hydraulikzylinders. Dabei ist als nachteilig anzusehen, dass mechanisch arbeitende Sensoren durch Verschmutzung mit Erdmaterial oder Pflanzenresten verschmutzen und unbeweglich werden können, was ihr korrektes Funktionieren unmöglich macht. Es sind zwar berührungslos arbeitende Sensoren bekannt, die beispielsweise zur Höhensteuerung an Schneidwerken Verwendung finden; sie haben jedoch preisliche Nachteile.

Das der Erfindung zugrunde liegende Problem wird darin gesehen, die Nachteile des Standes der Technik zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Sensor zur Erfassung der Position des Elements in das Gehäuse des Hydraulikzylinders zu integrieren. Der Sensor ist dort gegen Staub, Feuchtigkeit und andere Verunreinigungen geschützt und erfasst die Stellung des Kolbens des Hydraulikzylinders oder eines mit dem Kolben verbundenen Messelements. Da der Hydraulikzylinder zur Verstellung des Elements dient, ist die Stellung seines Kolbens ein Maß für die Lage des Elements gegenüber der übrigen Maschine.

Auf diese Weise erhält man ein landwirtschaftliches Gerät, dessen Einrichtung zur Messung (und vorzugsweise zur Regelung) der Position eines Elements störsicher arbeitet und eine lange Lebensdauer aufweist.

Das Ausgangssignal des Sensors oder ggf. der Sensoren kann einer Regeleinrichtung zugeführt werden, die ein Ventil steuert, das den bzw. die Hydraulikzylinder mit Hydraulikflüssigkeit beaufschlagt. Im konkreten kann der Hydraulikzylinder in eine Position verbracht werden, die einer von einem Benutzer eingegebenen oder von einer elektronischen Steuerung ermittelten Stellung entspricht. Zur Eingabe der gewünschten Werte kann eine am Fahrersitz eines Fahrzeugs angeordnete, separate oder eine bereits vorhandene Eingabeeinrichtung Verwendung finden. Die eingegebenen bzw. von der Steuerung gewählten Positionen können einem Benutzer auch in an sich bekannter Weise angezeigt werden. Der Positionierungszylinder kann insbesondere bei angebauten, selbstfahrenden oder gezogenen Erntemaschinen Verwendung finden. Er kann zur Höhenverstellung eines Erntevorsatzes, beispielsweise eines Schneidwerks oder eines Maiserntegeräts (Maisgebiss oder Pflücker) dienen. Der Erntevorsatz kann auch durch einen Positionierungszylinder um eine parallel zur Fahrtrichtung verlaufende Achse schwenkbar sein. Die Ansteuerung des Positionierungszylinders kann in an sich bekannter Weise durch Sensoren erfolgen, die die Höhe des Erntevorsatzes über dem Erdboden ermitteln. Der Positionierungszylinder wird in dieser Ausführungsform derart angesteuert, dass die Sollhöhe erreicht wird. Alternativ wäre denkbar, den Sollwert der Höhe des Erntevorsatzes gegenüber einem Punkt der Erntemaschine, z. B. der Unterseite der Räder, vorzugeben, und den Positionierungszylinder so anzusteuern, dass der Erntevorsatz diese Höhe erreicht. In dieser Ausführungsform erspart man sich die Höhensensoren; es ist jedoch zweckmäßig, die Höhe des Erntevorsatzes gegenüber dem Erdboden so groß zu wählen, dass nicht zu befürchten ist, dass der Erntevorsatz mit eventuell auf dem Erdboden vorhandenen Hindernissen zusammenstößt.

Auch das Entleerrohr des Korntanks eines Mähdreschers oder der Austragsschacht eines Feldhäckslers können durch den Positionierungszylinder verschwenkt und/oder linear bewegt werden. Bei einem Mähdrescher kann ein Strohhäcksler durch den Positionierungszylinder zwischen einer Betriebsstellung und einer Außerbetriebsstellung bewegt werden. Ein Strohleitblech, das entweder das Stroh zur Schwadablage auf den Boden des Feldes oder zum Häckseln in einen Einlass eines Strohhäckslers leitet, kann durch den Positionierungszylinder bewegt werden. Auch Gutbearbeitungseinrichtungen sind durch derartige Positionierungszylinder verstellbar, wie beispielsweise ein Dreschkorb zur Variation des Dreschspalts verstellbar sein kann, oder der Abstand zwischen zwei Walzen eines Körnerprozessors eines Feldhäckslers. Weiterhin kann eine Hangausgleichseinrichtung mit dem Positionierungszylinder bewegt werden.
Bei Mähgeräten kann die Position einer Deichsel durch den Positionierungszylinder variierbar sein, um das Mähgerät gegenüber einem Träger- oder Zugfahrzeug seitlich bewegen zu können. Analog können Schwadbleche und/oder so genannte Grouper (Schwadlegevorrichtungen) von selbstfahrenden, angebauten oder gezogenen Mähgeräten durch den Positionierungszylinder in die gewünschte Stellung verbracht werden. Ebenso kann die Gutaufnahmeeinrichtung einer Ballenpresse durch den Positionierungszylinder höhenverstellt werden.

Die Erfindung kann auch an Geräten zur Aufnahme und Bewegung von Lasten zum Einsatz kommen. Denkbar ist, die Tragarme und/oder die Lastaufnahmeeinrichtung (z. B. Schaufel oder Gabel) eines Frontladers mit einem Positionierungszylinder zu bewegen. Bei einem (in der Regel selbstfahrenden) Teleskoplader kann der zum Bewegen einer Last dienende Baum durch Positionierungszylinder in seiner Länge verändert und/oder verschwenkt werden. Auch die an der Spitze des Baums angeordnete Lastaufnahmeeinrichtung (beispielsweise Schaufel oder Gabel) des Teleskopladers kann mit einem Positionierungszylinder bewegt werden.

Schließlich ist die Erfindung auch bei Sämaschinen verwendbar, die von einem Fahrzeug gezogen werden. Bei ihnen kann die Sätiefe durch einen Positionierungszylinder vorgegeben werden. Er ersetzt die an sich bekannten Hydraulikzylinder, die die Tiefe der Säschare im Boden definieren.

Schließlich kann die Erfindung auch an Spritzmaschinen benutzt werden. Der Positionierungszylinder kann dort zum Steuern der Deichsel dienen. Er kann auch eine Achsschenkellenkung betätigen. Er kann die Höhe eines Spritzgestänges definieren, oder die Aus- und Einfahrbewegung des Spritzgestänges bewirken. Er kann eine Hangausgleichsvorrichtung bewegen, die die Spritzmaschine unabhängig von der jeweiligen Bodenneigung horizontal hält. Bei Spritzgestängen mit variabler Geometrie, die eine linke und rechte Hälfte aufweisen, die relativ zueinander (oder unabhängig voneinander) bewegbar sind, kann der Positionierungszylinder die Bewegung steuern.

## Patentansprüche

1. Erntemaschine, mit einem Element, das durch einen in einem Gehäuse angeordneten Hydraulikzylinder bewegbar ist, wobei die Position des Elements durch einen Sensor erfassbar ist, **dadurch gekennzeichnet, dass** der Sensor innerhalb des Gehäuses des Hydraulikzylinders angeordnet ist.

2. Erntemaschine nach Anspruch 1, **dadurch gekennzeichnet, dass** das durch den Hydraulikzylinder bewegbare Element ein Erntevorsatz, insbesondere ein Schneidwerk und/oder ein Entleerrohr und/oder ein Austragsschacht und/oder ein bewegbarer Strohhäcksler und/oder ein Strohleitblech und/oder ein Dreschkorb und/oder eine Walze eines Körnerprozessors und/oder eine Hangausgleichseinrichtung ist.

3. Mähmaschine oder Ballenpresse, mit einem Element, das durch einen in einem Gehäuse angeordneten Hydraulikzylinder bewegbar ist, wobei die Position des Elements durch einen Sensor erfassbar ist, **dadurch gekennzeichnet, dass** der Sensor innerhalb des Gehäuses des Hydraulikzylinders angeordnet ist.

4. Mähmaschine oder Ballenpresse nach Anspruch 3, **dadurch gekennzeichnet, dass** das durch den Hydraulikzylinder bewegbare Element eine Deichsel und/oder ein Schwadblech und/oder ein Grouper und/oder die Gutaufnahmeeinrichtung der Ballenpresse ist.

5. Gerät zur Aufnahme und Bewegung von Lasten, mit einem Element, das durch einen in einem Gehäuse angeordneten Hydraulikzylinder bewegbar ist, wobei die Position des Elements durch einen Sensor erfassbar ist, **dadurch gekennzeichnet, dass** der Sensor innerhalb des Gehäuses des Hydraulikzylinders angeordnet ist.

6. Gerät nach Anspruch 5, **dadurch gekennzeichnet, dass** das durch den Hydraulikzylinder bewegbare Element ein Tragarm und/oder eine Lastaufnahmeeinrichtung eines Frontladers und/oder ein Baum und/oder eine Lastaufnahmeeinrichtung eines Teleskopladers ist.

7. Sämaschine, mit einem Element, das durch einen in einem Gehäuse angeordneten Hydraulikzylinder bewegbar ist, wobei die Position des Elements durch einen Sensor erfassbar ist, **dadurch gekennzeichnet, dass** der Sensor innerhalb des Gehäuses des Hydraulikzylinders angeordnet ist.

8. Sämaschine nach Anspruch 7, **dadurch gekennzeichnet, dass** das Element die Sätiefe definiert.

9. Spritzmaschine, mit einem Element, das durch einen in einem Gehäuse angeordneten Hydraulikzylinder bewegbar ist, wobei die Position des Elements durch einen Sensor erfassbar ist, **dadurch gekennzeichnet, dass** der Sensor innerhalb des Gehäuses des Hydraulikzylinders angeordnet ist.

10. Spritzmaschine nach Anspruch 9, **dadurch gekennzeichnet, dass** das Element die Stellung einer Deichsel und/oder die Stellung einer Achsschenkellenkung und/oder die Höhe und/oder die Ausfahrbewegung eines Spritzgestänges und/oder die Stellung einer Hangausgleichseinrichtung und/oder eine Stellung eines Spritzgestänges variabler Geometrie definiert.
